# EUROPEAN PATENT SPECIFICATION

(11) **EP 2 774 896 B1**
(45) Date of publication and mention of the grant of the patent: **19.07.2017**
(21) Application number: 13275041.5
(22) Date of filing: 25.02.2013
(51) Int. Cl.: C03C 11/00, C03C 3/087, C03C 1/00, C03C 12/00, A01G 31/00

(54) **Foamed glass hydroponic substrate**
Geschäumtes hydroponisches Glassubstrat
Substrat hydroponique de verre expansé

(30) Priority: 22.02.2013 US 201313774038
(43) Date of publication of application: 10.09.2014
(73) Proprietor: Growstone, Inc., Albuquerque, NM 87105 (US)
(72) Inventor: Gray, Don, Albuquerque, NM New Mexico 87120 (US)
(74) Representative: Johnson, Yvonne Catherine

(56) References cited:
- US-A1- 2007 186 467
- US-A1- 2008 034 653
- US-A1- 2009 056 221

## Description

### TECHNICAL FIELD

The novel technology relates to a method of producing chemically stable foamed glass for use as a plant growth medium.

### BACKGROUND

Hydroponics is the science of growing plants in a nutrient solution with the mechanical support of an inert medium. Hydroponics is an old art, and a variety of inert media are known as suitable for the germination, rooting and growth of plants. Such substrates include peat, vermiculite, perlite, fly ash, pumice, rock wool, glass wool, organic and inorganic fibers, polymers such as polyurethane, polystyrene, polyethylene, and the like. These substrates have been used for true hydroponics or in quasi-hydroponic environments such as in admixtures with soil. Typically, the inert medium is either in the form of a contained loose particulate, such as sand, or as a rigid and self-supporting structure that can support growth of the plant. The rigid structure has some notable advantages over the loose particulates, in particular the ability to stand alone without a requisite container. However, the loose particulate media tend to offer better pathways for water and gasses to be delivered to and from the root systems.

One problem common to hydroponic gardening is under/overwatering. Some media offer limited porosity and/or limited means for circulating water into and out of pores. As a result, vegetation growing hydroponically is often underwatered. Conversely, hydroponic techniques lend themselves to the provision of excessive water to the plant root system, often in response to the underwatering that is occurring. Overwatering can result in chlorosis, retarded growth, pallor, and, eventually death. In such situations, the water around the roots becomes stagnant and gasses dissolved therein are only urged to and from the roots through diffusion. Moreover, vital gasses quickly become depleted and waste gasses saturated in the water proximate the roots, exacerbating the situation. Thus, it is desired to reduce the stagnant water around the roots by circulating the water.

Most of the substrates currently known are solids with limited porosity. Some known substrates have attempted to add or increase the porosity of the substrate in order to better provide for gas exchange to the roots. One such substrate has been produced in the form of a sponge-like or foraminous foamed polymer body with conduits 1-5 millimeter in nominal diameter, spaced about 1-8 mm apart and extending throughout the substrate. The conduits drain water from the substrate and provide reservoirs of oxygen for the plant roots and at the same time allow substrate to hold some water that may then be available to the roots. The porosity of this substrate ranges from between 6 and 53 percent. Soil or the like is deposited on top of the substrate and a seed, cutting or small plant is placed in the soil. With the substrate under the soil layer, over-watering induced problems are prevented, as excess water drains from the substrate, filling the conduits with air and oxygen will be readily available to the roots.

Another issue with known substrates is pH control. Natural substrates tend to include soluble mineral residue that dissolves at uncontrolled rates, shifting water pH. Man-made substrates likewise may include materials that dissolve over time and at nonlinear rates, shifting pH as they do. Changes in pH can have a drastic and deleterious effects on plant growth. While useful in hydroponic and soil amendment applications, the above substrates are still hampered by a lower than optimal porosity, limited wicking capacity, low capacity for water infiltration and retention, and uncontrolled pH arising from mineral dissolution.

The documents US 2007/0186467, US 2009/0056221 and US 2008/0034653 describe foamed glass substrates for use as plant growth medium and methods for its production. Thus, there remains a need for a highly porous substrate for supporting plant growth. There also remains a need for improves the aeration of soil and allows for better water filtration and irrigation. The present novel technology addresses these needs.

### SUMMARY OF THE NOVEL TECHNOLOGY

The present invention provides a method of producing chemically stable foamed glass for use as a plant growth medium, comprising the steps of:
a) combining a foaming agent, a pH control agent, and particulate waste glass to define an admixture having from about 1 weight percent to about 5 weight percent foaming agent and from about 1 weight percent to about 3 weight percent pH control agent with the remainder being particulate waste glass;
b) drying the admixture at temperatures between about 204 degrees Celsius (400 degrees Fahrenheit) to about 232 degrees Celsius (450 degrees Fahrenheit) and then arraying the resulting dry mixture into rows of powder mixture for firing and foaming;
c) after drying, sintering the admixture at temperatures between about 704 degrees Celsius (1300 degrees Fahrenheit) and about 816 degrees Celsius (1500 degrees Fahrenheit);
d) foaming the admixture at temperatures ranging from between about 788 degrees Celsius (1450 degrees Fahrenheit) and about 871 degrees Celsius (1600 degrees Fahrenheit) to yield a soft foamed glass body;
e) curing the soft foamed glass body at temperatures between about 849 degrees Celsius (1560 degrees Fahrenheit) and about 860 degrees Celsius (1580 degrees Fahrenheit);
f) cooling the soft foamed glass body at temperatures between about 760 degrees Celsius (1400 degrees Fahrenheit) and about 843 degrees Celsius (1550 degrees Fahrenheit); and
g) immediately after f), quenching the softened foamed glass body with flowing air at room temperature to yield a foamed glass substrate;
wherein the foamed glass substrate includes at least about 65 volume percent interconnected pores;
wherein the interconnected pores have diameters between about 0.2 mm and about 2 mm;
wherein the interconnected pore walls have a crazed microstructure; and
wherein the interconnected pores include a pH buffering agent available for aqueous dissolution;
wherein the dry mixture is in the form of a powder, and wherein the powder is supported by a fiberglass mesh fleece to prevent fines from spilling as the powder is moved in a continuous process via conveyor through a tunnel kiln, with the fleece being burned away as the powder sinters.

Related objects and advantages of the present novel technology will be apparent from the following description.

The subject matter of the following clauses is described but not claimed:
1. A pH stabilized foamed glass substrate, comprising:
   a glass matrix;
   a network of interconnected pores distributed throughout the glass matrix; and
   a water-soluble pH stabilizing agent distributed in the pores;
   wherein the network of interconnected pores fills between about 65 volume percent and about 85 volume percent of the glass matrix;
   wherein the pore diameters are generally between about 0.2 millimeters and about 2 millimeters.
2. The pH stabilized glass substrate of clause 1, wherein the network of interconnected pores defines a plurality of pore walls; and wherein each respective pore wall defines a network of microcracks.
3. A method of nourishing and anchoring roots, comprising the steps of:
   a) positioning a plurality of chemically stable porous foamed glass pellets, each respective pellet having a plurality of interconnected pores distributed throughout the pellet to define a bottom layer and each respective pellet infiltrated with a soluble pH stabilizing agent;
   b) covering the bottom layer of chemically stable porous foamed glass pellets with a unitary slab characterized by interconnected open porosity and defining a top layer;
   c) at least partially filling the plurality of interconnected pores with a water;
   d) dissolving pH stabilizing agent into water at least partially filling the plurality of interconnected pores; and
   e) at least partially infiltrating the plurality of interconnected pores with roots.
4. The method of clause 3 wherein the unitary slab is foamed glass.
5. The method of clause 3 or clause 4 wherein the plurality of interconnected pores are generally sized between about 0.2 and about 2 millimeters and wherein the unitary slab is characterized by an open porosity of between abut 0.2 and about 2 millimeters.
6. The method of any one of clauses 3 to 5 wherein the unitary slab and substantially each respective pellet has a water holding capacity of at least about 20 volume percent.
7. A method of nourishing and anchoring roots, comprising the steps of:
   a) positioning a plurality of chemically stabilized porous foamed glass pellets to define a first layer, wherein each respective pellet is infiltrated with a pH stabilizing agent;
   b) positioning a unitary porous foamed glass slab adjacent the a first layer to define a second layer;
   c) at least partially infiltrating the first and second layers with water;
   d) dissolving pH stabilizing agent into water infiltrating the first and second layers; and
   e) at least partially infiltrating the plurality of interconnected pores with roots;
   wherein the respective first and second layers has a water holding capacity of at least about 20 volume percent; and
   wherein the respective first and second layers are characterized by open, interconnected pores sized to allow passage of plant roots therethrough.
8. The method of clause 7 wherein the first and second layers are sufficiently chemically stable such that water filling infiltrating a respective layer experiences a pH shift of less than 0.5.
9. The method of clause 7 or clause 8 wherein at least one layer includes:
   (i) plant growth nutrients adsorbed onto pore surfaces; and/or
   (ii) herbicide adsorbed onto pore surfaces; and/or
   (iii) pesticide adsorbed onto pore surfaces.

### BRIEF DESCRIPTION OF THE DRAWINGS

FIG. 1A is a schematic view of a process for mixing a batch of precursors for a foamed glass article.
FIG. 1B is a schematic view of a process for firing a foamed glass article mixed according to FIG. 1A.
FIG. 1C is a perspective view of as milled glass powder according to the process of FIG. 1B.
FIG. 1D is a perspective view of rows of milled glass powder mixture ready for firing.
FIG. 1E is a perspective view of FIG. 1D after firing into a substantially continuous foamed glass sheet.
FIG. 2 is a partial perspective view of roots infiltrating the porosity of the foamed glass article of FIG. 1B.
FIG. 3 is a process diagram of the process illustrated in FIGs. 1A and 1B.
FIG. 4 is a cutaway elevation view of the article of FIG. 2 as partially immersed in water and supporting plant growth.
FIG. 5 is a plan view of a plurality of crushed foamed glass pebbles.
FIG. 6 is a cutaway elevation view of the article of a hydroponic system including foamed glass media as shown in FIG. 5 mixed with soil and supporting root growth.

### DETAILED DESCRIPTION OF THE PREFERRED EMBODIMENTS

For the purposes of promoting an understanding of the principles of the claimed invention and related technology and presenting its currently understood best mode of operation, reference will now be made to the embodiments illustrated in the drawings and specific language will be used to describe the same. It will nevertheless be understood that no limitation of the scope of the novel technology is thereby intended, with such alterations and further modifications in the illustrated device and such further applications of the principles of the novel technology as illustrated therein being contemplated as would normally occur to one skilled in the art to which the novel technology relates. The scope of the invention is defined by the claims.

In general, whenever a feature is described in relation to one embodiment of the invention, it can also be applied mutatis mutandis to any other embodiment of the invention, except where that would not make sense.

As stated above, the present invention provides a method of producing chemically stable foamed glass for use as a plant growth medium.

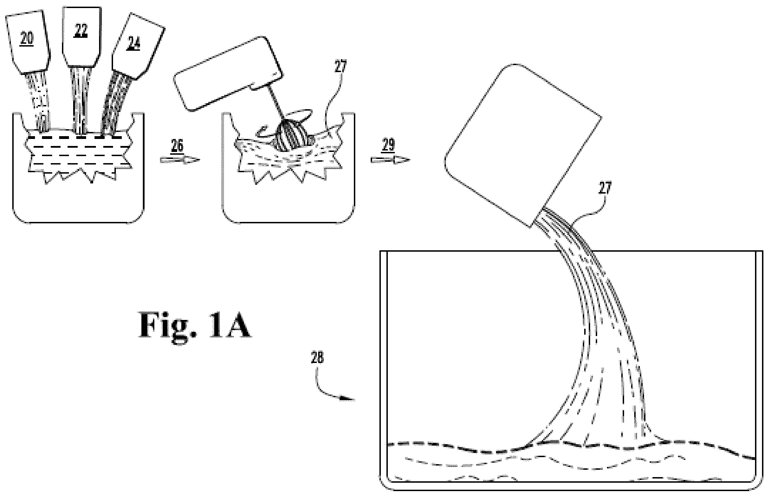

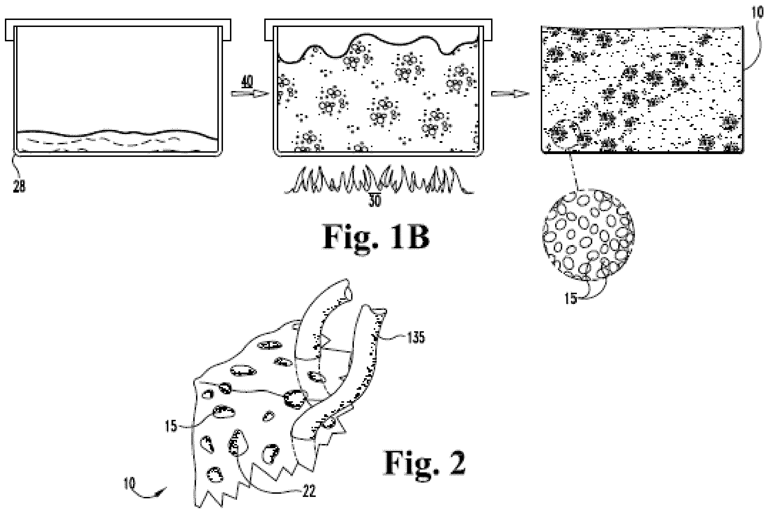

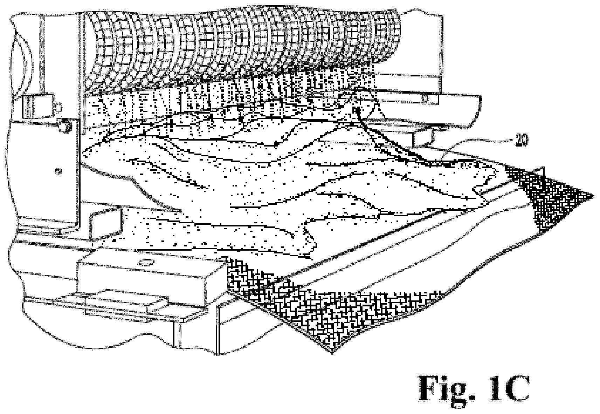

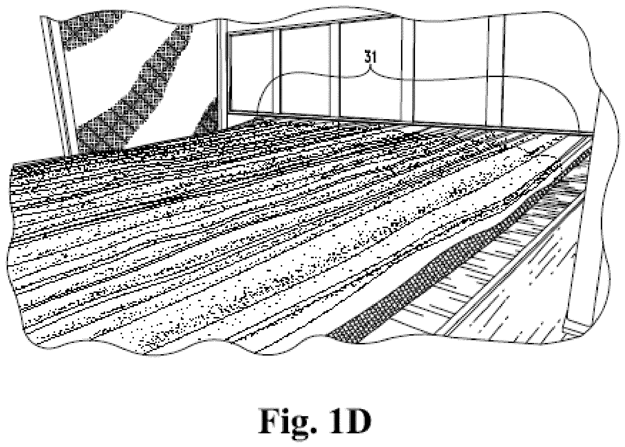

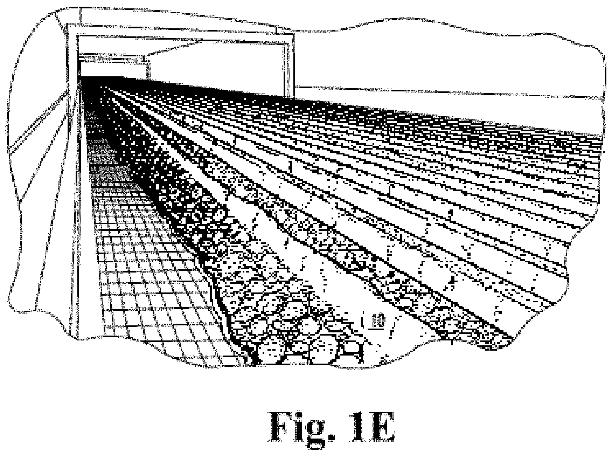

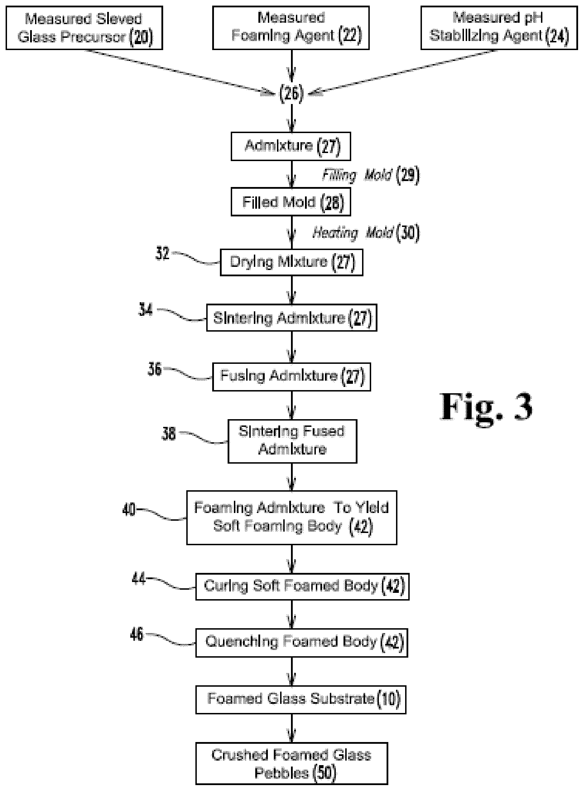

FIGs. 1A-3 illustrate a lightweight foamed glass substrate 10 defining a plurality of voluminous, interconnecting pores 15 for supporting plant growth. The pores 15 typically have diameters ranging from about 0.2 mm to about 2.0 mm. The pore walls 17 typically exhibit a crazed or microcracked microstructure 19 to facilitate wicking. As illustrated schematically in FIGs. 1A-2, a ground, milled and/or powdered glass precursor 20, such as recycled waste bottle and/or window glass, is mixed with a foaming agent 22 (typically a finely ground non-sulfur based gas evolving material, such as calcium carbonate) to define an admixture 27. The foaming agent 22 is typically present in amounts between about 1 weight percent and about 3 weight percent and sized in the average range of about 80 to minus 325 mesh (i.e. any particles smaller than this will pass through - typically, the apertures in 80 mesh are between about 150 and about 200 micrometers across and the apertures in -352 mesh are between about 40 and about 60 micrometers across). More typically, the foaming agent has a particle size between about 5 and about 150 microns. A pH modifier, such as dicalcium phosphate, 24 is added to the admixture 27, wherein the pH modifier 24 becomes effective when the foamed glass product 10 is used in an aqueous environment. The pH modifier 24 is present in amounts between about 1 and 3 weight percent, more typically between about 1 and about 2 weight percent. Additional plant growth nutrient material may be added to the starting mixture to vary or enhance the plant growth characteristic of the final product 10.

Foamed glass, like most ceramics, is naturally hydrophobic. As hydrophobic surfaces are not conducive to wetting and impede capillary action, treatment is typically done to make the pore walls 17 hydrophilic. In one embodiment, the pore walls 17 are coated to form a plurality of microcracks 19 therein. The microcracks 19 supply increased surface area to support wicking. Alternately, or in addition, an agent may be added to further amend the surface properties to make the foamed glass more hydrophilic. Such an agent may be a large divalent cation contributor, such as ZnO, BaO, SrO or the like. The hydrophilic agent is typically added in small amounts, typically less than 1.5 weight percent and more typically in amounts of about 0.1 weight percent.

The combination is mixed 26, and the resulting dry mixture 27 may then be placed into a mold 28or pressed into a green body and fired without the use of a mold. The resulting dry mixture is arrayed into rows 31 of powder mixture 27 for firing and foaming. Thus, whether placed 29 into the mold 28 or not, the mixture 27 is arrayed in the form of several rows 31, such as in mounds or piles of mixture typically having a natural angle of repose of about 15 to 50 degrees, although even greater angles to the horizontal can be achieved by compressing the dry mixture 27. This arraying of the rows 31 allows increased control, equilibration and optimization of the heating of the powder 27 during firing, reducing hot and cold spots in the furnace as the powder 27 is heated. This combing of the powder 27 into typically rows 31 of triangular cross-sections allows heat to be reflected and redirected to keep heating of the rows generally constant.

The mold 28, if used, is typically a refractory material, such as a steel or ceramic, and is more typically made in the shape of a frustum so as to facilitate easy release of the final foamed glass substrate 10. Typically, the inside surfaces of the mold 28 are coated with a soft refractory release agent to further facilitate separation of the foam glass substrate 10 from the mold 28.

In the claimed invention, the powder 27 is supported by a fiberglass mesh fleece to prevent fines from spilling as the powder 27 is moved in a continuous process via conveyor through a tunnel kiln; the fleece is burned away as the powder 27 sinters.

The so-loaded mold 28 is heated 30 in a furnace by a continuous foaming process. More typically, the mixture 27 is then heated 30 in order to first dry 32, the sinter 34, fuse 36, soften 38, and foam 40 the mixture 27 and thereby produce a foamed glass substrate 10 having a desired density, pore size and hardness. As the powdered mixture 27 is heated to above the softening point of glass (approximately 566 degrees Celsius (1050 degrees Fahrenheit)) the mixture 27 begins to soften 38, sinter 34, and shrink. The division of the powdered mixture 27 into rows or mounds allows the glass to absorb heat more rapidly and to therefore foam faster by reducing the ability of the foaming glass to insulate itself. At approximately 552 degrees Celsius (1025 degrees Fahrenheit), the calcium carbonate, if calcium carbonate has been used as the foaming agent 22, begins to react with some of the silicon dioxide in the glass 20 to produce calcium silicate and evolved carbon dioxide. Carbon dioxide is also evolved by decomposition of any remaining calcium carbonate once the mixture reaches about 838 degrees Celsius (1540 degrees Fahrenheit), above which calcium carbonate breaks down into calcium oxide and carbon dioxide gas. Once the temperature of the mixture 27 reaches about 788 degrees Celsius (1450 degrees Fahrenheit), the glass mixture 27 will have softened sufficiently for the released carbon dioxide to expand and escape through the softened, viscous glass; this escape of carbon dioxide through the softened glass mass is primarily responsible for the formation of cells and pores therein. The mixture 27 in the mold 28 is held for a period of time at a peak foaming temperature of between about 788 degrees Celsius (1450 degrees Fahrenheit) and about 871 degrees Celsius (1600 degrees Fahrenheit),. By adjusting the firing temperatures and times, the density and hardness as well as other properties of the resultant substrate 10 may be closely controlled.

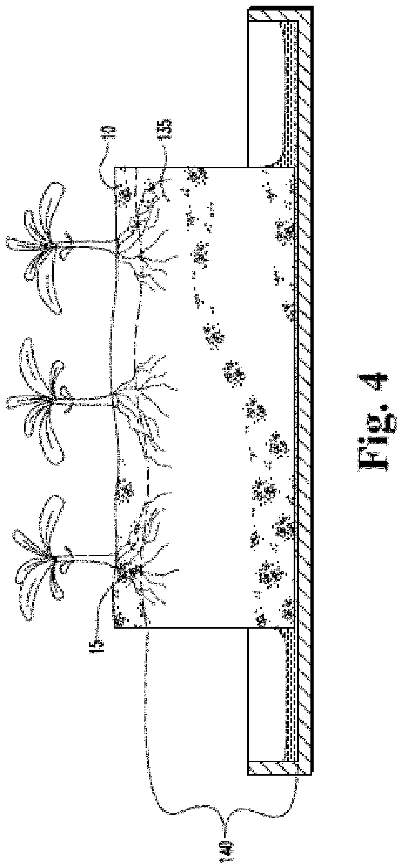

As the mixture 27 reaches foaming temperatures, each mass of foaming 40 glass, originating from one of the discrete rows or mounds, expands until it comes into contact and fuses with its neighbors. The fused mass of foaming glass then expands to conform to the shape of the walls of the mold 28, filling all of the corners. The shapes and sizes of the initial mounds of mixture are determined with the anticipation that the foaming 40 mixture 27 exactly fills the mold 28. After the glass is foamed 40 to the desired density and pore structure, the temperature of the furnace is rapidly reduced to halt foaming 40 of the glass. When the exterior of the foamed glass in the mold has rigidified sufficiently, the resultant body 10 of foamed glass is removed from the mold 28 and is then air quenched to thermally shock the glass to produce a crazed microstructure 19. Once cooled, any skin or crust is typically cut off of the foamed glass substrate 10, which may then be cut or otherwise formed into a variety of desired shapes. Pore size is controlled within the range of between about 2.0 mm and 0.2 mm, and is typically controlled such that the interconnected or open porosity may readily accommodate a typical plant root 135 (see FIG. 4). Substrate density can be controlled from about 0.4g/cc to about 0.26g/cc. Typically, the bulk density of the crushed foam may be as low as 50% of the polyhedral density.

The substrate 10 may be either provided as a machined polyhedral shape 10 or, more typically, as a continuous sheet that may be impacted and/or crushed to yield aggregate or pebbles 50 (typically sized to be less than 1 inch in diameter). The crushed substrate material 50 may be used to retain water and increase air volume in given soil combinations. The polyhedrally shaped substrate bodies 10 are typically sized and shaped as growing media for seeds and immature plants, such as for use in soil or hydroponic systems 140 (see FIGs. 4-6). The foamed glass substrate material 10 is thus used to improve aeration and water retention in agricultural systems, and the porous polyhedral material 10 also provides a sufficiently spacious path for root growth and attenuation. The foamed glass material 10 itself is typically resistant to aqueous corrosion and has minimal impact on solution pH. In order to provide better pH control, the foamed glass material 10 is doped (in batch stage, prior to foaming) with specific dicalcium phosphate or a like pH stabilizing material 24 which dissolves in water to help stabilize the pH. The foamed glass substrate 10 can typically hold between about 1.5 and about 5 times its own weight in water in the plurality of interconnected pores 17.

Crushed foam bodies 50 may be rapidly made by an alternate method which is described but not claimed. Using soda-lime glass frit or powder as the glass component 22, the processing is similar to that described above but without the annealing step. The alternate method employs the same foaming temperature ranges as related above. The batch material 27 consists of up to 8 percent by mass limestone, magnesite, or other applicable foaming agent 22, usually less than 2 percent by mass dicalcium phosphate 24, with the balance being a borosilicate, silicate, borate or phosphate glass frit 22. The batch 27 is then placed in a typically shallow mold 28, more typically having a configuration of less than 2" batch for every square yard of mold surface. The mold 28 is typically then heated to approximately 250°C above the dilatometric softening point for soda-lime glass (or the equivalent viscosity for other glass compositions) and allowed to foam. The mold 28 is held at the foaming temperature for less than 30 minutes and then pan quenched, i.e. substantially no annealing is allowed to occur.

This method typically yields a material 10 of density less than 0.25g/cc, and more typically as low as about 0.03g/cc. This material 10 is then crushed into pebbles 50, with a corresponding lower bulk density as per the above-described method. Material made by this alternate method has similar chemical properties as described above, can accommodate an even larger nutrient content, but has substantially lower strength.

Still another alternate method of preparing foamed glass substrate material 10, which is described but not claimed, is as follows. A batch 27 is prepared as discussed above and pressed into small (typically less than 5mm diameter) pellets. The pellets are rapidly heated, such as by passage through a flame source, passage through a rotary furnace, or the like. Typically, the pellets are heated to about 816 degrees Celsius (1500 degrees Fahrenheit), such as to cause the pellet to expand as a foam particulate without the need for a mold. This material yields the weakest, but least dense foam particles. The typical density may be as low as 0.02g/cc or as high as 0.2g/cc, or higher.

As stated above, the present invention provides a method of producing chemically stable foamed glass for use as a plant growth medium. The method yields a foamed glass substrate. The foamed glass substrate 10, either in polyhedral body form or crushed product form, may serve as a root system support and an aeration and/or water retention aid. The material 10 typically enjoys a void fraction of at least about 80 percent. The substrate 10 is typically mechanically mixed with as little as 15% by volume soil or soil mixture and this new mixture will still generate solution chemistry dominated by soil.

The polyhedral product 10 typically functions as a supporting substrate for both soil based and hydroponic applications. The polyhedral substrate 10 may be tailored to be compatible with mildly acidic, neutral, or mildly alkaline solution pH. The pore network 15 is compatible with root propagation through the material 10. The pore network typically has surface adhesion or adsorption properties such that chemical additives 51, such as plant growth nutrients, herbicides, pesticides or combinations thereof, may be physically adsorbed thereonto for later release. Typically, these additives are added in small amounts, such as a few weight percent (0.5 1, 2, 5, or the like) of the substrate product 10.

As stated above, the present invention provides a method of producing chemically stable foamed glass for use as a plant growth medium. The method yields a foamed glass substrate, wherein the foamed glass substrate includes at least about 65 volume percent interconnected pores. The foamed glass substrate 10 typically has a porosity in the range of between about sixty-five and about eighty-five percent. Air holding capacity is typically between about forty and about fifty-five percent. Water holding capacity typically ranges from between about twenty and about thirty-five percent.

Porosity is measured during the production process using a parameter testing protocol. Bulk density and pH are also measured during production, with the results providing active feedback for a control loop.

The pore size is between about 0.2 mm and about 2.0 mm in diameter, typically with a relatively tight pore size distribution. The finished substrate 10 is typically processed through a series of conveyors and crushing equipment to yield a desired size spread of pellets 50.

The precursor glass material is typically recycled or post-consumer waste glass, such as plate, window and/or bottle glass. The glass is ground or milled to a fine mesh profile of minus 107 microns. A typical sieve analysis of the precursor glass is given as Table 1, and a compositional analysis of the glass is given as Table 2.

**Tab le 1**

| **Sieve Analysis** | | | |
|---|---|---|---|
| **Class up to** | **Pass** | **Remaindser** | **Incidence** |
| **(µm)** | **(%)** | **(%)** | **(%)** |
| 0.7 | 1.3 | 98.7 | 1.3 |
| 0.9 | 1.6 | 98.4 | 0.3 |
| 1 | 1.8 | 98.2 | 0.2 |
| 1.4 | 2.8 | 97.2 | 1.0 |
| 1.7 | 3.7 | 96.3 | 0.9 |
| 2 | 4.6 | 95.4 | 0.9 |
| 2.6 | 6.4 | 93.6 | 1.8 |
| 3.2 | 7.9 | 92.1 | 1.5 |
| 4 | 9.9 | 90.1 | 2.0 |
| 5 | 12.0 | 88 | 2.1 |
| 6 | 14.0 | 86 | 2.0 |
| 8 | 17.5 | 82.5 | 3.5 |
| 10 | 20.5 | 79.5 | 3.0 |
| 12 | 23.3 | 76.7 | 2.8 |
| 15 | 27.3 | 72.7 | 4.0 |
| 18 | 31.1 | 68.9 | 3.8 |
| 23 | 37.2 | 62.8 | 6.1 |
| 30 | 45.1 | 54.9 | 7.9 |
| 36 | 51.2 | 48.8 | 6.1 |
| 45 | 59.2 | 40.8 | 8.0 |
| 56 | 67.6 | 32.4 | 8.4 |
| 63 | 72.3 | 27.7 | 4.7 |
| 70 | 76.6 | 23.4 | 4.3 |
| 90 | 86.5 | 13.5 | 9.9 |
| 110 | 92.7 | 7.3 | 6.2 |
| 135 | 97.1 | 2.9 | 4.4 |
| 165 | 99.3 | 0.7 | 2.2 |
| 210 | 100.0 | 0 | 0.7 |

**Table 2**

| Glass oxide | Wt.% |
|---|---|
| SiO₂ | 71.5 |
| Na₂O | 12.6 |
| K₂O | 0.81 |
| Al₂O₃ | 2.13 |
| CaO | 10.1 |
| MgO | 2.3 |
| TiO₂ | 0.07 |
| Fe₂O₃ | 0.34 |
| BaO | 0.01 |
| SO₃ | 0.05 |
| ZnO | 0.01 |

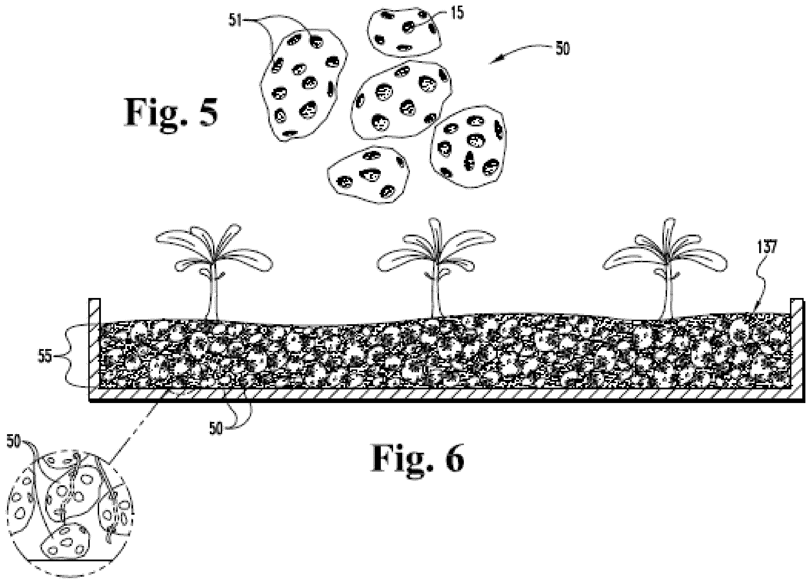

As stated above, the present invention provides a method of producing chemically stable foamed glass for use as a plant growth medium. FIGs. 4 and 5 illustrate embodiments of the novel technology which are described but not claimed, namely hydroponic systems 40, 55 for growing plants. A hydroponic system 40 is disclosed wherein a substrate block 10 is partially immersed in a fluid medium 42, such as water or an aqueous nutrient solution. Roots 35 extend downwardly into the top of the substrate block 10 through the interconnected open pores 15. Nutrient solution 42 is carried upwardly into the block 10 via capillary action through the open pores.

FIG. 6 illustrates another embodiment of the present novel technology which is described but not claimed, namely a system 155 including foamed glass pebbles or pellets 50 prepared as detailed above and used in a soil-pellet mixture 157 into which plant roots 135 may extend. The mixture 157 may, in addition to the pellets 50, include soil, clay, peat moss, nitrates, fertilizer, manure or the like and mixtures thereof. Likewise, the pellets 50 may be used in place of perlite in soil admixtures. The pellets 50 contribute by picking up, holding, and slowly releasing water, as well as by providing a network of 'anchors' for the roots 135 to extend into and through.

The invention will now be described further with respect to the following non-limiting example.

### EXAMPLE 1

A plant growth support substrate 10 having a pore network 15 and pH control agent 24 embedded therein is produced from a precursor batch of about 1.25 weight percent calcium carbonate, about 1.25 weight percent dicalcium phosphate anhydrous, about 0.2 weight percent iron oxide colorant, and about 97 weight percent recycled post-consumer glass ground or milled to minus 107 microns, are mixed together. The resulting mixture 27 is placed into a stainless steel mold 28 having inside dimensions of 4.25 inches by 4 inches by 8.25 inches. The mold 28 is covered with a one-half inch stainless steel plate. The mold 28 with the mixture 27 therein is fired 30 in a tunnel kiln having a plurality of zones with a travel rate of about 10 inches per minute and a residence time in each zone of about 9 minutes. The first zone typically has a temperature of about between about 93 degrees Celsius (200 degrees Fahrenheit) and about 260 degrees Celsius (500 degrees Fahrenheit), more typically between about 204 degrees Celsius (400 degrees Fahrenheit) and about 232 degrees Celsius (450 degrees Fahrenheit), and still more typically about 107 degrees Celsius (225 degrees Fahrenheit), wherein drying 32 of the mixture 27 is accomplished. Zones 2-4 have temperatures increasing from about 704 degrees Celsius (1300 degrees Fahrenheit) to about 816 degrees Celsius (1500 degrees Fahrenheit), and sintering 34 is accomplished therein. Foaming 40 occurs primarily in zones 4 and 5, with zone 5 having a temperature of about 860 degrees Celsius (1580 degrees Fahrenheit). In zone 6, temperature about 854 degrees Celsius (1570 degrees Fahrenheit), foaming 40 is finalized and the resultant soft foamed body 42 is cured 44. In the final zone, cooling begins as the temperature is decreased to about 760 degrees Celsius (1400 degrees Fahrenheit). Upon exiting the tunnel kiln, the foamed body 42 is air quenched 46 to produce the desired crazed microstructure 19. The cooledblock of foamed glass 10 is removed from the mold 28, and the outer layer of crust is removed (such as with a band saw) to expose the open porosity. The substrate 10 is further cooled and quenched until it is approximately at room temperature. The resulting block typically has a density of about fourteen pounds per cubic foot and a pore size distribution ranging from about 0.5 to 2 mm. The resulting block has open, interconnected pore cells.

While the novel technology has been illustrated and described in detail in the drawings and foregoing description, the same is to be considered as illustrative and not restrictive in character. It is understood that the embodiments have been shown and described in the foregoing specification in satisfaction of the best mode and enablement requirements. It is understood that one of ordinary skill in the art could readily make a nigh-infinite number of insubstantial changes and modifications to the above-described embodiments and that it would be impractical to attempt to describe all such embodiment variations in the present specification. Accordingly, it is understood that all changes and modifications that come within the scope of the claims are desired to be protected.

## Claims

1. A method of producing chemically stable foamed glass for use as a plant growth medium, comprising the steps of:
a) combining a foaming agent, a pH control agent, and particulate waste glass to define an admixture having from about 1 weight percent to about 5 weight percent foaming agent and from about 1 weight percent to about 3 weight percent pH control agent with the remainder being particulate waste glass;
b) drying the admixture at temperatures between about 204 degrees Celsius (400 degrees Fahrenheit) to about 232 degrees Celsius (450 degrees Fahrenheit) and then arraying the resulting dry mixture into rows of powder mixture for firing and foaming;
c) after drying, sintering the admixture at temperatures between about 704 degrees Celsius (1300 degrees Fahrenheit) and about 816 degrees Celsius (1500 degrees Fahrenheit);
d) foaming the admixture at temperatures ranging from between about 788 degrees Celsius (1450 degrees Fahrenheit) and about 871 degrees Celsius (1600 degrees Fahrenheit) to yield a soft foamed glass body;
e) curing the soft foamed glass body at temperatures between about 849 degrees Celsius (1560 degrees Fahrenheit) and about 860 degrees Celsius (1580 degrees Fahrenheit);
f) cooling the soft foamed glass body at temperatures between about 760 degrees Celsius (1400 degrees Fahrenheit) and about 843 degrees Celsius (1550 degrees Fahrenheit); and
g) immediately after f), quenching the softened foamed glass body with flowing air at room temperature to yield a foamed glass substrate;
wherein the foamed glass substrate includes at least about 65 volume percent interconnected pores;
wherein the interconnected pores have diameters between about 0.2 mm and about 2 mm;
wherein the interconnected pore walls have a crazed microstructure; and wherein the interconnected pores include a pH buffering agent available for aqueous dissolution;
wherein the dry mixture is in the form of a powder,
and wherein the powder is supported by a fiberglass mesh fleece to prevent fines from spilling as the powder is moved in a continuous process via conveyor through a tunnel kiln, with the fleece being burned away as the powder sinters.

2. The method of claim 1 wherein the foamed glass substrate is either provided as a machined polyhedral shape or as a continuous sheet that may be impacted and/or crushed to yield aggregate or pebbles.

3. The method of claim 1 or claim 2 wherein the foamed glass substrate has an air holding capacity of at least about 40 volume percent and wherein the foamed glass substrate has a water holding capacity of at least about 20 volume percent.

4. The method of any one of claims 1 to 3, the method further comprising:
h) crushing the foamed glass substrate to yield a plurality of foamed glass pebbles.

5. The method of any one of claims 1 to 4, wherein the foamed glass substrate is a foamed glass slab **characterized by** about 80 percent open porosity and **characterized by** a typical pore size generally between about 0.2 millimeters and about 2 millimeters.

6. The method of any one of claims 1 to 5 wherein the pH buffering agent is dicalcium phosphate.

7. The method of any one of claims 1 to 6 wherein the mixture is placed into a mold.

8. The method of any one of claims 1 to 7 wherein the mixture is arrayed in mounds or piles of mixture.

9. The method of claim 8 wherein the mixture is provided in mounds or piles of mixture having a natural angle of repose of about 15 to 50 degrees to the horizontal.

10. The method of any one of claims 1 to 9 wherein the rows are of triangular cross-section.

11. The method of any one of claims 1 to 10 wherein the foaming agent is calcium carbonate.

## Patentansprüche

1. Verfahren zur Herstellung von chemisch stabilem Schaumglas zur Verwendung als Pflanzenwachstumsmedium, umfassend die Schritte:
a) Kombinieren eines Schaummittels, eines pH-Kontrollmittels und eines teilchenförmigen Altglases, um eine Beimischung mit etwa 1 Gewichtsprozent bis etwa 5 Gewichtsprozent Schaummittel und von etwa 1 Gewichtsprozent bis etwa 3 Gewichtsprozent pH-Kontrollmittel zu definieren, wobei der Rest teilchenförmiges Altglas ist;
b) Trocknen der Beimischung bei Temperaturen zwischen etwa 204 Grad Celsius (400 Grad Fahrenheit) bis etwa 232 Grad Celsius (450 Grad Fahrenheit;
c) nach dem Trocknen, Sintern der Beimischung bei Temperaturen zwischen etwa 704 Grad Celsius (1300 Grad Fahrenheit) und etwa 816 Grad Celsius (1500 Grad Fahrenheit);
d) Schäumen der Beimischung bei Temperaturen im Bereich von etwa 788 Grad Celsius (1450 Grad Fahrenheit) und etwa 871 Grad Celsius (1600 Grad Fahrenheit), so dass ein weicher, Schaumglaskörper erhalten wird;
e) Härten des weichen Schaumglaskörpers bei Temperaturen zwischen etwa 849 Grad Celsius (1560 Grad Fahrenheit) und etwa 860 Grad Celsius (1580 Grad Fahrenheit);
f) Kühlen des weichen Schaumglaskörpers bei Temperaturen zwischen etwa 760 Grad Celsius (1400 Grad Fahrenheit) und etwa 843 Grad Celsius (1550 Grad Fahrenheit); und
g) unmittelbar nach f) Quenchen des erweichten Schaumglaskörpers im Luftstrom bei Raumtemperatur, so dass ein Schaumglassubstrat erhalten wird;
wobei das Schaumglassubstrat mindestens etwa 65 Volumenprozent miteinander verbundene Poren enthält;
wobei die miteinander verbundenen Poren einen Durchmesser zwischen etwa 0,2 mm und etwa 2 mm aufweisen;
wobei die Wände der miteinander verbundenen Poren eine krakelierte Mikrostruktur aufweisen; und
wobei die miteinander verbundenen Poren ein pH-Puffermittel enthalten, das für die wässrige Auflösung verfügbar ist,
wobei das trockene Gemisch die Form eines Pulvers hat,
und wobei das Pulver durch ein Glasfasermaschenvlies unterstützt wird, welches verhindert, dass Feinstoffe ausrieseln, wenn das Pulver in einem kontinuierlichen Verfahren über Förderband durch einen Tunnelofen bewegt wird, wobei das Vlies beim Sintern des Pulvers abbrennt.

2. Verfahren nach Anspruch 1, wobei das Schaumglassubstrat entweder als maschinell bearbeitete polyedrische Form oder als kontinuierliche Bahn bereitgestellt wird, die gepresst und/oder zerkleinert werden kann, so dass man Zuschlag und/oder Schotter erhält.

3. Verfahren nach Anspruch 1 oder Anspruch 2, wobei das Schaumglassubstrat eine Lufthaltekapazität von mindestens etwa 40 Volumenprozent aufweist und wobei das Schaumglassubstrat eine Wasserhaltekapazität von mindestens etwa 20 Volumenprozent aufweist.

4. Verfahren nach einem der Ansprüche 1 bis 3, wobei das Verfahren zudem umfasst:
h) Zerkleinern des Schaumglassubstrats, so dass man eine Vielzahl an Schaumglasschotter erhält.

5. Verfahren nach einem der Ansprüche 1 bis 4, wobei das Schaumglassubstrat eine Schaumglasplatte ist, die durch etwa 80% offene Porosität charakterisiert ist und durch eine typische Porengröße im allgemeinen zwischen etwa 0,2 Millimeter und etwa 2 Millimeter charakterisiert ist.

6. Verfahren nach einem der Ansprüche 1 bis 5, wobei das pH-Puffermittel Dicalciumphosphat ist.

7. Verfahren nach einem der Ansprüche 1 bis 6, wobei das Gemisch in einer Form untergebracht wird.

8. Verfahren nach einem der Ansprüche 1 bis 7, wobei das Gemisch in Gemisch-Haufen oder -Stapeln angeordnet ist.

9. Verfahren nach Anspruch 8, wobei das Gemisch in Gemisch-Haufen oder -Stapeln mit einem natürlichen Böschungswinkel von etwa 15 bis 50 Grad zur Horizontalen bereitgestellt wird.

10. Verfahren nach einem der Ansprüche 1 bis 9, wobei die Reihen dreieckigen Querschnitt aufweisen.

11. Verfahren nach einem der Ansprüche 1 bis 10, wobei das Schaummittel Calciumcarbonat ist.

## Revendications

1. Procédé de production de verre expansé chimiquement stable destiné à être utilisé en tant que milieu de croissance de plantes, comprenant les étapes de :
a) combinaison d'un agent d'expansion, d'un agent d'ajustement du pH et de déchets de verre particulaires pour former un mélange comprenant d'environ 1 pour cent en poids à environ 5 pour cent en poids d'agent d'expansion et d'environ 1 pour cent en poids à environ 3 pour cent en poids d'agent d'ajustement du pH, le reste étant des déchets de verre particulaires ;
b) séchage du mélange à des températures comprises entre environ 204 degrés Celsius (400 degrés Fahrenheit) et environ 232 degrés Celsius (450 degrés Fahrenheit) et ensuite disposition du mélange sec résultant en rangées de mélange en poudre pour cuisson et expansion ;
c) après séchage, frittage du mélange à des températures comprises entre environ 704 degrés Celsius (1300 degrés Fahrenheit) et environ 816 degrés Celsius (1500 degrés Fahrenheit) ;
d) expansion du mélange à des températures comprises entre environ 788 degrés Celsius (1450 degrés Fahrenheit) et environ 871 degrés Celsius (1600 degrés Fahrenheit) pour produire un corps en verre expansé tendre ;
e) durcissement du corps en verre expansé tendre à des températures comprises entre environ 849 degrés Celsius (1560 degrés Fahrenheit) et environ 860 degrés Celsius (1580 degrés Fahrenheit) ;
f) refroidissement du corps en verre expansé tendre à des températures comprises entre environ 760 degrés Celsius (1400 degrés Fahrenheit) et environ 843 degrés Celsius (1550 degrés Fahrenheit) ; et
g) immédiatement après f), trempe du corps en verre expansé adouci avec une circulation d'air à température ambiante pour produire un substrat en verre expansé ;
dans lequel le substrat en verre expansé comprend au moins environ 65 pour cent en volume de pores interconnectés ;
dans lequel les pores interconnectés ont des diamètres compris entre environ 0,2 mm et environ 2 mm ;
dans lequel les parois des pores interconnectés ont une microstructure craquelée ; et
dans lequel les pores interconnectés comprennent un agent tampon de pH disponible pour la dissolution en milieu aqueux ;
dans lequel le mélange sec est sous la forme d'une poudre et
dans lequel la poudre est supportée par une nappe de treillis de fibre de verre pour empêcher les fines de se répandre lorsque la poudre est déplacée dans un processus continu par l'intermédiaire d'un transporteur dans un four tunnel, la nappe étant éliminée par combustion lorsque la poudre est frittée.

2. Procédé selon la revendication 1 dans lequel le substrat en verre expansé est fourni soit sous une forme polyédrique usinée soit sous forme d'une feuille continue qui peut être écrasée et/ou concassée pour produire un agrégat ou des boulettes.

3. Procédé selon la revendication 1 ou la revendication 2 dans lequel le substrat en verre expansé a une capacité de rétention d'air d'au moins environ 40 pour cent en volume et dans lequel le substrat en verre expansé a une capacité de rétention d'eau d'au moins environ 20 pour cent en volume.

4. Procédé selon l'une quelconque des revendications 1 à 3, le procédé comprenant en outre :
h) le concassage du substrat en verre expansé pour produire une pluralité de boulettes de verre expansé.

5. Procédé selon l'une quelconque des revendications 1 à 4, dans lequel le substrat en verre expansé est une plaque de verre expansé **caractérisée par** une porosité ouverte d'environ 80 pour cent et **caractérisée par** une taille caractéristique des pores généralement comprise entre environ 0,2 millimètre et environ 2 millimètres.

6. Procédé selon l'une quelconque des revendications 1 à 5 dans lequel l'agent tampon de pH est le phosphate dicalcique.

7. Procédé selon l'une quelconque des revendications 1 à 6 dans lequel le mélange est placé dans un moule.

8. Procédé selon l'une quelconque des revendications 1 à 7 dans lequel le mélange est disposé en amas ou tas de mélange.

9. Procédé selon la revendication 8 dans lequel le mélange est fourni en amas ou tas de mélange ayant un angle de talus naturel d'environ 15 à 50 degrés par rapport à l'horizontale.

10. Procédé selon l'une quelconque des revendications 1 à 9 dans lequel les rangées ont une section transversale triangulaire.

11. Procédé selon l'une quelconque des revendications 1 à 10 dans lequel l'agent d'expansion est le carbonate de calcium.
